# EUROPEAN PATENT APPLICATION

(11) **EP 3 916 552 A1**
(43) Date of publication of application: **01.12.2021**
(21) Application number: 20177236.5
(22) Date of filing: 28.05.2020
(51) Int. Cl.: G06F 9/50, G06F 9/54

(54) **METHOD AND PROCESSING UNIT FOR RUNNING APPLICATIONS OF A TECHNICAL, SENSOR- AND ACTUATOR-BASED SYSTEM AND TECHNICAL SYSTEM**

(71) Applicant: Siemens Aktiengesellschaft, 80333 München (DE)
(72) Inventor: Höfig, Kai, 83101 Rohrdorf (DE)

(57) **Abstract**

In order to run applications of a technical, sensor- and actuator-based system (SY), by which on one hand critical resource consumption of the system is minimized and on the other requiring a safest way of system operation, when the system can harm people or a system environment, a high-quality safe function with low resource invest of the technical system is provided it is proposed to provide a special hardware architecture, a distributed system hardware architecture (DSHA), along with a development strategy to shift cost intensive functions in terms of resource consumption such as energy, calculation power, memory or physical space into a cloud computing (CLC) where resources are much cheaper than on the technical system (SY), which is preferably a cyber-physical device or system, a mobile device, an Automated Guided Vehicle <AGV>, a robot, an automated, autonomous driving car or any other device or system with similar attributes, with safety critical functionality and reduced resources.

Since a shift of functions that are safety critical into the cloud computing (CLC) requires a communication technology connection (COT) - e.g. a network connection, preferably at least one of secure and stable, between the technical system (SY) and the cloud computing (CLC), protections against a loss of the connection are required.

## Description

The invention refers to a method for running applications of a technical, sensor- and actuator-based system according to claim 1 and a processing unit for running applications of a technical, sensor- and actuator-based system according to claim 7.

In a technical system, nowadays mostly Hardware- and Software-structured (including HW/SW-components), such as a cyber-physical device or system, e.g. a mobile device, an Automated Guided Vehicle <AGV>, a robot, an automated, autonomous driving car or any other device or system with similar attributes, the control of sensors and actuators inside the technical system is carried out by applications, called as APP's. Depending on how extensive the application-based controlling of the sensors and actuators, how time-critical and resource-intensive the execution with respect to the controlling and how complex the calculation for executing the applications within the technical system are, the system-related deployment of the applications and running them is impacted.

So, applications of the technical system that are based on Artificial Intelligence <AI> are resource-intensive, especially when it comes to real-time-based applications which is always the case for safety-critical applications since they must react to a harmful event as soon as possible. This concerns learning algorithms and even computations that come from a fixed artificial intelligence algorithm, e.g. a neural network without learning mechanism.

To run such applications resources that are critical in a technical system, especially in an automated, autonomous driving car but also in the other devices or systems aforementioned, are for instance power consumption, calculation power, memory and physical space.

So far, the state of practice is to increase the quality of a function so that the provided functionality is safe and then build the hardware to fit the resource requirements.

It is an objective of the invention to propose a method and processing unit for running applications of a technical, sensor- and actuator-based system as well as a technical system, by which on one hand critical resource consumption of the system is minimized and on the other requiring a safest way of system operation, when the system can harm people or a system environment, a high-quality safe function with low resource invest of the technical system is provided.

This objective is solved with regard to a method by the features of claim 1.

The objective is further solved with regard to a processing unit defined by the features of claim 7.

The objective is solved furthermore with regard to a technical system by the features of claim 13.

The main idea of the invention according to the claims 1, 7 and 13 is to provide a special hardware architecture along with a development strategy to shift cost intensive functions in terms of resource consumption such as energy, calculation power, memory or physical space into a cloud computing where resources are much cheaper than on a technical system, e.g. a cyber-physical device or system, a mobile device, an Automated Guided Vehicle <AGV>, a robot, an automated, autonomous driving car - cf. claims 3 and 9 - or any other device or system with similar attributes, with safety critical functionality and reduced resources.

Since a shift of functions that are safety critical into the cloud computing requires a communication technology connection - e.g. a network connection, preferably at least one of secure and stable - cf. claims 6 and 12 -, between the technical system and the cloud computing, protections against a loss of the connection are required.

The benefit is the heavily reduced resource consumption on the technical system itself in terms of energy consumption, computational power, memory or physical space. The costly functions are shifted from the technical system into the cloud computing where resources are much cheaper. On the other hand, to do so, a good network connection is required that provides enough bandwidth to transfer sensorial data from the technical system to the cloud computing and commands from the cloud computing back to the technical system in a way that a closed loop functionality can be established and all timing and reaction time requirements of the function are fulfilled.

All of that is realized by a distributed system hardware architecture, the technical system is embedded in, which is used to
- shift either at least one resource-intensive or -critical, sensor data-based application, deployed in real-time for actuator-usage, of the system or at least one resource-intensive or -critical, sensor data-based application, deployed in real-time for actuator-usage, of the system and sensor data each for its running into the cloud computing being connected in terms of the communication technology with the system,
- execute a transfer of data to or from the cloud computing for running the application via the communication technology connection,
- manage the operation of the technical, sensor- and actuator-based system at the loss of the communication technology connection, so for instance due to, despite or besides the shift of the application into the cloud computing.

This architecture can easily be discovered in situations where safety critical systems require a network connection to operate.

In order to manage the operation in terms of the loss of the communication technology connection only those safety functions are implemented on the system that constantly supervise the connection and trigger in case of the loss of the connection a safe state of the technical system.

For example, if the system is an automated, autonomous driving car, the car is brought into a safe stop.

Furthermore, not in all situations, a safe state can easily be maintained, for example in technical systems that cannot be stopped without further actions such as airplanes or heavy machinery. But on the other hand, keep the system safely running for a short time until the network connection is reestablished can be an alternative solution to that.

With this functionality, all complex or heavy computations can, if the bandwidth and the latency time of the connection to the cloud computing is wide enough, be pushed into the cloud computing.

The resources of the technical system can dramatically reduce and only require sufficing for sensors, actuators, system-cloud computing-interface and function that supervises the connection and brings the system into the safe state.

From a hardware implementation perspective according to claim 7, there is a processing unit for running the applications of the technical system with a cloud computing layer including a first processing capacity, an application layer or logical layer with a second processing capacity and finally a system layer including a virtual processing element, e.g. a virtualization Central Processing Unit <CPU>, forming the distributed system hardware architecture.

On the application or logical layer all computational resources and sensor information appears to be available as in a local and exclusive environment. On the system layer of this architecture, only some of the resources from the application or logical layer are available in the car itself. The rest of the resources is virtualized by the virtual processing element.

This virtual processing element is responsible for
- A secured connection to the resources e.g. the computational and information sources, in the cloud computing.
- The management of the connection in general
- Providing the available information resources from the cloud computing to the application layer
- Automatically shifting local resources to the cloud computing in case of shortcomings
- Managing the safety of the system, e.g. automated, autonomous driving car, in case of a lost connection by, e.g. informing the local computational resources that cloud computing resources are not available and the automated, autonomous driving car needs to be set in a secure state, e.g. by stopping it
- Load balancing the requests for resources from different applications and prioritizing between those requests
- Compressing provided data, e.g. sensor data, so that it can be transmitted to the cloud computing
- Preprocess the data
   - if no complex or heavy computational resources are required, e.g. by reducing the actual size of image material so that it can be transmitted efficiently to the cloud computing for computation,
   - after the resource demands by the application layer is distributed to local and cloud computing-based resources using the virtual processing element, e.g. the virtualization CPU,
   - if some of the computational power is used from the cloud computing and after calculations,
   - if responses are transmitted back to the virtual processing element, e.g. the virtualization CPU, which then provide the information to the application layer.

Thereby the virtual processing element interact functionally with the aforementioned cited components of the distributed system hardware architecture such that - according to the claims 2 and 8 - at least one of the following is carried out
- the application is shifted for its running either based on requests or demands of the processing capacity in the application layer, so for instance by at least one of load balancing and prioritizing the requests or demands, or automatically due to shortcomings of the technical system,
- the communication technology connection to the processing capacity in the cloud computing layer for running the application is maintained or deployed,
- the transfer of the data to the processing capacity in the cloud computing layer, e.g. the sensor data, is executed by at least one of compressing and preprocessing the data and the transfer of the data from the processing capacity in the cloud computing layer, e.g. cloud computing responses due to the request or demands, is executed, so for instance by receiving the data and forwarding it to the processing capacity in the application layer,
- the operation of the technical, sensor- and actuator-based system, so for instance the safety of the system in the case of losing the communication technology connection, is managed by accordingly taking distinct system actions, e.g. setting the system in a secure state.

Moreover, advantageous further developments of the invention arise out of the following description of a preferred embodiment of the invention according to a FIGURE.

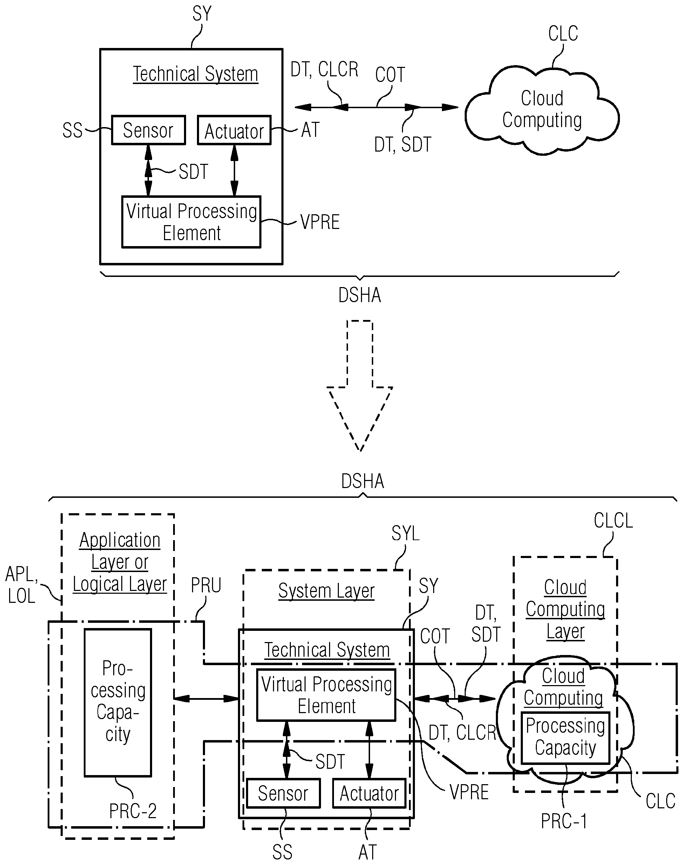

The FIGURE 1 shows - in an upper part - a technical system SY and a cloud computing CLC, which are embedded in a distributed system hardware architecture DSHA for running applications of the technical system SY.

"Cloud computing" is according to http://en.wikipedia in the version from May 25, 2020 the on-demand availability of computer system resources, especially data storage (cloud storage) and computing power, without direct active management by the user. The term is generally used to describe data centers available to many users over the Internet.

The technical system SY is preferably a cyber-physical device or system, a mobile device, an Automated Guided Vehicle <AGV>, a robot, an automated, autonomous driving car or any other device or system with similar attributes, which includes a sensor SS, an actuator AT and a virtual processing element VPRE, which is for instance a virtualization Central Processing Unit <CPU>.

In the course of running the applications of the technical system SY through the distributed system hardware architecture DSHA the virtual processing element VPRE accesses the sensor SS and the actuator AT.

Furthermore, also for running the applications the cloud computing CLC and the technical system SY, embedded in the distributed system hardware architecture DSHA, are connected with each other in terms of communication technology COT. The communication technology connection COT, which is for instance a network connection, is preferably at least one of stable and secure.

For this purpose the distributed system hardware architecture DSHA is used firstly to shift at least one resource-intensive or -critical application of the technical system SY, which - preferably concerns artificial intelligence as already mentioned in the introductory part of the present patent application - is based on sensor data SDT and is deployed in real-time for an usage in the actuator AT, for its running into the cloud computing CLC. The resource, used intensively by the application or being critical, is for instance energy, calculation power, memory or physical space.

Alternatively, for being used firstly the distributed system hardware architecture DSHA is used to shift the at least one resource-intensive or -critical application of the technical system SY and the sensor data SDT for its running into the cloud computing CLC.

Secondly, the distributed system hardware architecture DSHA is used to execute a transfer of data DT, SDT, CLCR to or from the cloud computing CLC for running the application via the communication technology connection COT.

Finally and thirdly, the distributed system hardware architecture DSHA is used to manage the operation of the technical SY at a loss of the communication technology connection COT, so for instance due to, despite or besides the shift of the application into the cloud computing CLC.

Besides the three aforementioned tasks to run the at least one resource-intensive or -critical application of the technical system SY the distributed system hardware architecture DSHA is designed further such that at least one of the following actions is carried out:
At first the application is shifted for its running based on requests or demands. This can be done preferably by at least one of load balancing and prioritizing the requests or demands. Alternatively, the application is shifted automatically for its running or due to shortcomings of the technical system SY.

At second the communication technology connection COT to the cloud computing CLC is maintained or deployed for running the application.

At third the transfer of the data DT, SDT to the cloud computing CLC, such as the sensor data SDT, is executed by at least one of compressing and preprocessing the data DT, SDT and the transfer of the data DT, CLCR from the cloud computing CLC, such as cloud computing responses CLCR due to the request or demands, is executed.

At last and fourth the operation of the technical system SY is managed by accordingly taking distinct system actions, such as the setting the technical system SY in a secure state. This could be preferably the safety of the technical system SY in the case of losing the communication technology connection COT.

The FIGURE depicts further - in a lower part - the distributed system hardware architecture DSHA from a hardware implementation perspective. According to this depiction the distributed system hardware architecture DSHA is formed by a processing unit PRU for running the applications of the technical system SY with a cloud computing layer CLCL including a first processing capacity PRC-1, an application layer APL or logical layer LOL with a second processing capacity PRC-2 and finally a system layer SYL including the technical system SY with the sensor SS, the actuator AT and the virtual processing element VPRE designed preferably as the virtualization Central Processing Unit <CPU> and which in the course of running the applications of the technical system SY through the distributed system hardware architecture DSHA accesses the sensor SS and the actuator AT.

The processing unit PRU forming the distributed system hardware architecture DSHA is designed such that firstly at least one resource-intensive or -critical application of the technical system SY, which - preferably again concerns artificial intelligence - is based on the sensor data SDT and is deployed in real-time for the usage in the actuator AT, is shifted for its running into the cloud computing CLC on the cloud computing layer CLCL, which is connected in terms of the communication technology COT with the technical system SY on the system layer SYL. The resource, used intensively by the application or being critical, is again for instance energy, calculation power, memory or physical space.

Alternatively it also possible that the at least one resource-intensive or -critical application of the technical system SY and the sensor data SDT are shifted for its running into the cloud computing CLC on the cloud computing layer CLCL, which is connected in terms of the communication technology COT with the technical system SY on the system layer SYL.

Secondly, the processing unit PRU forming the distributed system hardware architecture DSHA is designed such that a transfer of data DT, SDT, CLCR to or from the cloud computing CLC for running the application is executed via the communication technology connection COT.

Finally and thirdly, the processing unit PRU forming the distributed system hardware architecture DSHA is designed such that the operation of the technical SY is managed at a loss of the communication technology connection COT, so for instance again due to, despite or besides the shift of the application into the cloud computing CLC.

Besides the three aforementioned tasks to run the at least one resource-intensive or -critical application of the technical system SY the processing unit PRU forming the distributed system hardware architecture DSHA is designed further such that at least one of the following actions is carried out:
At first the application is shifted for its running based on requests or demands of the processing capacity PRC-2 on the application layer APL respectively the logical layer LOL. This can be done again preferably by at least one of load balancing and prioritizing the requests or demands. Alternatively, the application is shifted automatically for its running or due to shortcomings of the technical system SY.

At second the communication technology connection COT to the processing capacity PRC-1 on the cloud computing layer CLCL is maintained or deployed for running the application.

At third the transfer of the data DT, SDT to the processing capacity PRC-1 on the cloud computing layer CLCL, such as the sensor data SDT, is executed by at least one of compressing and preprocessing the data and the transfer of the data DT, CLCR from the processing capacity PRC-1 on the cloud computing layer CLCL, such as cloud computing responses CLCR due to the request or demands, is executed, for instance by receiving the data and forwarding it to the processing capacity PRC-2 on the application layer APL respectively the logical layer LOL.

At last and fourth the operation of the technical system SY is managed by accordingly taking distinct system actions, such as the setting the technical system SY in a secure state. This could be preferably the safety of the technical system SY in the case of losing the communication technology connection COT.

## Claims

1. Method for running applications of a technical, sensor- and actuator-based system (SY), by which
a distributed system hardware architecture (DSHA) is used to
- shift either at least one resource-intensive or -critical, sensor data-based application, deployed in real-time for actuator-usage, of the system or at least one resource-intensive or -critical, sensor data-based application, deployed in real-time for actuator-usage, of the system and sensor data (SDT) each for its running into a cloud computing (CLC) being connected in terms of communication technology (COT) with the system (SY),
- execute a transfer of data (DT, SDT, CLCR) to or from the cloud computing (CLC) for running the application via the communication technology connection (COT),
- manage the operation of the technical, sensor- and actuator-based system (SY) at a loss of the communication technology connection (COT), in particular due to, despite or besides the shift of the application into the cloud computing (CLC) .

2. Method according to claim 1, **characterized in that** the distributed system hardware architecture (DSHA) is used to carrying at least one of
- shifting the application for its running either based on requests or demands, in particular by at least one of load balancing and prioritizing the requests or demands, or due to shortcomings of the system (SY),
- maintaining or deploying the communication technology connection (COT) to the cloud computing (CLC) for running the application,
- executing the transfer of the data (DT, SDT) to the cloud computing (CLC), e.g. sensor data (SDT), by at least one of compressing and preprocessing the data (DT, SDT) and the transfer of the data (DT, CLCR) from the cloud computing (CLC), e.g. cloud computing responses (CLCR) due to the request or demands,
- managing the operation of the technical, sensor- and actuator-based system (SY), in particular the safety of the system (SY) in the case of losing the communication technology connection (COT), by accordingly taking distinct system actions, e.g. setting the system (SY) in a secure state.

3. Method according to claim 1 or 2, **characterized in that**
the technical, sensor- and actuator-based system (SY) is an automated, autonomous driving car.

4. Method according to one of the claims 1 to 3, **characterized in that**
the application concerns artificial intelligence.

5. Method according to one of the claims 1 to 4, **characterized in that**
the resource, used intensively by the application or being critical, is energy, calculation power, memory or physical space.

6. Method according to one of the claims 1 to 5, **characterized in that**
the communication technology connection (COT) to the cloud computing (CLC) is at least one stable and secure.

7. Processing unit (PRU) for running applications of a technical, sensor- and actuator-based system (SY), with a cloud computing layer (CLCL) including a first processing capacity (PRC-1), an application layer (APL) or logical layer (LOL) with a second processing capacity (PRC-2) and a system layer (SYL) including a virtual processing element (VPRE) forming a distributed system hardware architecture (DSHA) such that
- either at least one resource-intensive or -critical, sensor data-based application, deployed in real-time for actuator-usage, of the system or at least one resource-intensive or - critical, sensor data-based application, deployed in real-time for actuator-usage, of the system and sensor data (SDT), wherein the sensor data (SDT) and the application either reside or are available on the application layer (APL) respectively the logical layer (LOL), is shifted each for its running into a cloud computing (CLC) on the cloud computing layer (CLCL), which is connected in terms of communication technology (COT) with the system (SY) on the system layer (SYL),
- a transfer of data (DT, SDT, CLCR) to or from the cloud computing (CLC) for running the application is executed via the communication technology connection (COT),
- the operation of the technical, sensor- and actuator-based system (SY) is managed at a loss of the communication technology connection (COT), in particular due to, despite or besides the shift of the application into the cloud computing (CLC) .

8. Processing unit (PRU) according to claim 7, **characterized in that**
the cloud computing layer (CLCL) with its processing capacity (PRC-1), the application layer (APL) or the logical layer (LOL) with its processing capacity (PRC-2) and the system layer (SYL) with the virtual processing element (VPRE) forming the distributed system hardware architecture are designed and interact functionally such that the virtual processing element (VPRE) is responsible for at least one of the following
- shifting the application for its running either based on requests or demands of the processing capacity (PRC-2) on the application layer (APL) respectively the logical layer (LOL), in particular by at least one of load balancing and prioritizing the requests or demands, or automatically due to shortcomings of the system (SY),
- maintaining or deploying the communication technology connection (COT) to the processing capacity (PRC-1) on the cloud computing layer (CLCL) for running the application,
- executing the transfer of the data (DT, SDT) to the processing capacity (PRC-1) on the cloud computing layer (CLCL), e.g. the sensor data (SDT), by at least one of compressing and preprocessing the data (DT, SDT) and the transfer of the data (DT, CLCR) from the processing capacity (PRC-1) on the cloud computing layer (CLCL), e.g. cloud computing responses (CLCR) due to the request or demands, in particular by receiving the data and forwarding it to the processing capacity (PRC-2) on the application layer (APL) respectively the logical layer (LOL),
- managing the operation of the technical, sensor- and actuator-based system (SY), in particular the safety of the system (SY) in the case of losing the communication technology connection (COT), by accordingly taking distinct system actions, e.g. setting the system (SY) in a secure state.

9. Processing unit (PRU) according to claim 7 or 8, **characterized in that**
the technical, sensor- and actuator-based system is an automated, autonomous driving car.

10. Processing unit (PRU) according to one of the claims 7 to 9, **characterized in that**
the application concerns artificial intelligence.

11. Processing unit (PRU) according to one of the claims 7 to 10, **characterized in that**
the resource, used intensively by the application, is energy, calculation power, memory or physical space.

12. Processing unit (PRU) according to one of the claims 7 to 11, **characterized in that**
the communication technology connection (COT) to the cloud computing (CLC) is at least one of stable and secure.

13. Technical system (SY), in particular an automated, autonomous driving car, with each at least one sensor (SS) and actuator (AT) comprising a virtual processing element (VPRE), which is designed, in particular assigned to a processing unit (PRU) according to one of the claims 7 to 12, such that the method according to one of the claims 1 to 6 is carried out.
